(19) Europäisches Patentamt
European Patent Office
Office européen des brevets

(11) Publication number: 0 449 605 A2

# (12) EUROPEAN PATENT APPLICATION

(21) Application number: 91302673.8

(22) Date of filing: 27.03.91

(51) Int. Cl.[5]: C08L 59/00, C08L 75/06, C08L 75/08, C08G 2/18, C08G 18/56, // (C08L59/00, 75:06), (C08L59/00, 75:08)

(30) Priority: 28.03.90 JP 82330/90

(43) Date of publication of application: 02.10.91 Bulletin 91/40

(84) Designated Contracting States: AT BE CH DE DK ES FR GB GR IT LI LU NL SE

(71) Applicant: POLYPLASTICS CO. LTD.
3-13, Azuchicho, 2-chome
Chuo-Ku Osaka-shi Osaka 541 (JP)

(72) Inventor: Kashihara, Osamu
Morishita 52
Fuji-shi, Shizuoka (JP)

(74) Representative: Jackson, Peter et al
HYDE, HEIDE & O'DONNELL 10-12 Priests Bridge
London SW15 5JE (GB)

## (54) Polyacetal resin composition.

(57) A polyacetal resin composition having improved impact strength, weld strength and flex-resistance comprises 99 to 40 % by weight of a polyacetal resin component (A) and 1 to 60 % by weight of a thermoplastic polyurethane (B), characterized in that said polyacetal resin component (A) comprises 99.5 to 1 parts by weight of a polyacetal ($A_1$) containing hydroxyl groups in its molecule in an amount smaller that 50 mmol/kg and 0.5 to 99 parts by weight of a modified polyacetal ($A_2$) containing hydroxyl groups in its molecule in an amount of 50 mmol/kg or above. The composition resists delamination of its surface layer and thus avoids deposition of delaminated material on the surface of a molding tool. It is useful for components of automobiles and of electrical, electronic and other household and business appliances.

EP 0 449 605 A2

The present invention relates to a polyacetal resin composition. More particularly, the present invention relates to a polyacetal resin composition which comprises a polyacetal resin component comprising a polyacetal and a specifically modified polyacetal and a thermoplastic polyurethane and which can give a molded article which exhibits high impact strength, weld strength and flex resistance and is free from delamination with extremely reduced mold deposit.

As is well known, polyacetal resin has found use in an extremely wide field as a representative engineering plastic which is excellent in physical properties such as mechanical and electrical properties and chemical properties such as chemical and heat resistances. As the application field has widened, however, the polyacetal resin has been required to be further improved in various properties necessary for specific duties.

For example, a molded article to be used as an automobile component is expected to exhibit high impact resistance over a wide temperature range. The addition of a thermoplastic polyurethane as an impact modifier has been proposed as a means for improving the impact resistance of a polyacetal resin (see Japanese patent Laid-Open Nos. 145243/1984 and 19652/1986).

However, these previously proposed means have disadvantages due to the poor interfacial adhesion between a polyacetal resin and a thermoplastic polyurethane not only in that the effect of the polyurethane as an impact modifier cannot sufficiently be exhibited but also in that the obtained molded article exhibits very low weld strength and suffers from delamination between the polyacetal and the polyurethane in the surface layer and in that the decomposition product of the polyacetal or the polyurethane or the delaminated substance deposits on a mold surface to bring about dimensional distortion and lower the molding efficiency, though the means can give a resin composition having acceptable impact resistance. Therefore a further improvement in these respects has been sought.

The inventors of the present invention have intensively studied to obtain a polyacetal resin composition free from the above disadvantages and have found that the use of a polyacetal modified by the introduction of hydroxyl group thereinto is effective in improving the compatability of a thermoplastic polyurethane with a polyacetal and that a polyacetal resin composition free from the above disadvantages and excellent in impact resistance can be obtained by blending a thermoplastic polyurethane with a polyacetal resin component comprising a polyacetal and such a modified polyacetal. The present invention has been accomplished on the basis of these findings.

Namely the present invention relates to a polyacetal resin composition comprising 99 to 40 % by weight of a polyacetal resin component (A) and 1 to 60 % by weight of a thermoplastic polyurethane (B) characterized in that said polyacetal resin component (A) comprises 99.5 to 1 parts by weight of a polyacetal ($A_1$) containing hydroxyl groups in its molecule in an amount smaller than 50 mmol/kg and 0.5 to 99 parts by weight of a modified polyacetal ($A_2$) containing hydroxyl groups in its molecule in an amount of 50 mmol/kg or above.

The polyacetal ($A_1$) to be used in the present invention is a high-molecular compound mainly composed of oxymethylene units [ie ($-CH_2O-$)] and the compound may be any one selected from among polyoxymethylene homopolymer and copolymers (including block copolymers) and terpolymers comprising oxymethylene units and a small amount of other constituent units, which may be linear, branched or crosslinked.

The homopolymer is generally prepared by the polymerization of anhydrous formalhyde or a cyclic trimer thereof, ie trioxane. Generally the homopolymer is stabilized against thermal decomposition by end capping. The copolymer is a high-molecular compound comprising about 85 to 99.9 % of repeating $-OCH_2-$ units and the balance of repeating units represented by the general formula:

$$
\begin{array}{ccccccc}
 & & R_2 & - & R_2 & & \\
 & & | & & | & & \\
-O- & & C & - & C & - (R_3)_m - & \\
 & & | & & | & & \\
 & & R_1 & - & R_1 & &
\end{array}
$$

wherein $R_1$ and $R_2$ are each a hydrogen atom or a group selected from the group consisting of lower alkyl and halogenated lower alkyl group; $R_3$ groups are each a group selected from among methylene, oxymethylene and lower alkyl- or halogenated lower alkyl-substituted oxymethylene groups; and m is an integer of 0 to 3, each of the above lower alkyl groups having 1 or 2 carbon atoms, scattering therein, and having a number-average molecular weight of 5,000 or above and a melting point of 150°C or higher. Such a copolymer is generally prepared by the copolymerization of formaldehyde or a cyclic oligomer thereof represented by the general formula: $(CH_2O)_n$ [wherein n is an integer of 3 or above], such as trioxane, with a cyclicether and/or a cyclic

formal. The obtained copolymer is generally stabilized against thermal decomposition by removing unstable terminal moieties by hydrolysis. Examples of the cyclicether or formal to be copolymerized include ethylene oxide, propylene oxide, tetrahydrofuran, dioxolane, oxepane, ethylene glycol formal, 1,4-butanediol formal and 1,6-hexanediol formal.

The terpolymer is prepared by further using a polyfunctional compound such as diglycidyl ether in the above copolymerization.

According to a know process for the preparation of a polyacetal as described above, an extremely slight amount of a hydroxyl group is sometimes introduced into a polyacetal molecule by the action of water and methanol contained in the monomer and/or comonomer components as impurities. Alternatively, in some cases, an extremely slight amount of a hydroxyl group is introduced into a polyacetal molecule in the step of stabilizing the terminals of the obtained polyacetal by esterification, etherification or hydrolysis. The polyacetal ($A_1$) according to the present invention is one containing hydroxyl groups in an amount of 50 mmol/kg or below as prepared by the above process. Ordinary polyacetals industrially produced belong to this category.

Next the modified polyacetal ($A_2$) to be used in the present invention is one which is prepared by additionally using a hydroxylated compound in the above preparation of a polyacetal to copolymerize the compound with the monomer components or by reacting the terminals of the polyacetal prepared by the above process with a hydroxylated compound to introduce hydroxyl groups into a polyacetal molecule and has hydroxyl groups in an amount of at least 50 mmol/kg, preferably 70 to 300 mmol/kg, and a weight-average molecular weight of 500 to 100000. The quantity of a hydroxyl group can be determined by, for example, a method described in Applied Polymer Science, 38, 87 (1989).

Examples of the hydroxylated compound to be used for the modification include polyhydric alcohols, partial esters thereof with alkylene oxide, hydroxylated glycidyl ethers and glycidyl esters, hydroxylated cyclic acetals, and water.

Particularly preferably, the modified polyacetal ($A_2$) is one prepared by conducting the homopolymerization of formalhyde or a cyclic oligomer thereof represented by the general formula: $(CH_2O)n$ [wherein n is an integer of 3 or above] or the copolymerization of formalhyde or a cyclic oligomer thereof with a cyclic acetal such as ethylene oxide, dioxolane or 1,4-butanediol formal in the presence of a compound having at least three hydroxyl groups in its molecule, thereby to introduce hydroxyl groups into a polyacetal molecule. Particular examples of the compound having at least three hydroxyl groups in its molecule to be used in this process include compounds such as glycerin, trimethylolpropane, pentaerythritol, diglycerin, sorbitan, sorbitol, sorbitan monoester and diglycerin monoester; and adducts thereof with alkylene oxide such as ethylene oxide, propylene oxide or butylene oxide.

According to the present invention, the weight ratio of the polyacetal ($A_1$) to the modified polyacetal ($A_2$), i.e. $A_1/A_2$, is between 99.5 : 0.5 and 1 : 99. Generally, the optimum $A_1/A_2$ ratio varies depending upon the degree of modification (hydroxyl content) of the modified polyacetal ($A_2$). That is, in the case of using a modified polyacetal ($A_2$) having a relatively low hydroxyl content, which generally has a relatively high-molecular weight, it is preferable that the proportion of the component ($A_2$) be higher, while in the case of using one having a relatively high hydroxyl content, which generally has a relatively low molecular weight, it is suitable that the proportion of the component ($A_2$) be lower.

However, when the proportion of the modified polyacetal ($A_2$) is lower than 0.5 part by weight, the problematic delamination between a polyacetal resin and a thermoplastic polyurethane will be hardly overcome. The weight ratio of the polyacetal ($A_1$) to the modified polyacetal ($A_2$) (ie, $A_1/A_2$ ratio) is preferably between 97 : 3 and 70 : 30.

Although the thermoplastic polyurethane (B) to be used in the present invention is not particularly limited but may be any known one, it is generally a product prepared by the reaction among the following components (i), (ii) and (iii):

(i) a diisocyanate compound,
(ii) a high-molecular weight polyol having a molecular weight of 500 to 5000, and
(iii) a low-molecular weight polyol and/or polyamine having a molecular weight of 60 to 500.

The diisocyanate compound (i) constituting the thermoplastic polyurethane to be used in the present invention includes 1,4-butylene diisocyanate, 1,6-hexamethylene diisocyanate, cyclopentylene-1,3-diisocyanate, 4,4'-dicyclohexylmethane diisocyanate, isophorone diisocyanate, cyclohexylene-1,4-diisocyanate, 2,4-tolylene diisocyanate, 2,6-tolylene diisocyanate, mixtures of 2,4-tolylene diisocyanate with 2,6-tolylene diisocyanate, 4,4'-methylenebis(phenyl isocyanate), 2,2-diphenylpropane-4,4'-diisocyanate, p-phenylene diisocyanate, m-phenylene diisocyanate, xylene diisocyanate, 1,4-naphthylene diisocyanate, 1,5-naphthylene diisocyanate, 4,4'-diphenyl diisocyanate, azobenzene-4,4'-diisocyanate, m- or p-tetramethylxylene diisocyanate and 1-chlorobenzene-2,4-diisocyanate, among which 4,4'-methylenebis(phenyl isocyanate), 1,6-hexamethylene diisocyanate, 2,4-tolylene diisocyanate and isophorone diisocyanate are preferable.

The high-molecular weight polyol (ii) constituting the thermoplastic polyurethane serves as a soft segment of the polyurethane (B) and has a molecular weight of 500 to 5000, preferably 1000 to 3000. The high-molecular weight polyol includes polyester diols (including polycarbonate diols) and polyether diols, which each have hydroxyl groups at both ends. A small amount of a triol may be used as a part of the component (ii).

It is suitable that the polyester diol be one prepared from one or more dihydric alcohols and one or more dicarboxylic acids. The dicarboxylic acid constituting the polyester diol includes adipic, succinic, sebacic, suberic, methyladipic, glutaric, pimelic, azelaic, thiodipropionic and citraconic acids and mixtures thereof with a small amount of an aromatic dicarboxylic acid. The dihydric alcohol which is the other component of the polyester diol includes 1,3- and 1,2-propylene-glycol, 1,4-butanediol, 1,3-butanediol, 2-methylpentanediol, 1,5-diethylene glycol, 1,5-pentanediol, 1,6-pentanediol, 1,12-dodecanediol and mixtures thereof.

Further, hydrocarboxylic acids, lactones and carbonates, for example ε-caprolactone and 3-hydroxybutyric acid may be used as the constituent of the polyester diol.

The polyester diol is preferably a diol of polyadipate, polyactone or polycarbonate.

On the other hand, the polyether diol is preferably a condensation product of one or more alkylene glycols, for example, ethylene glycol, 1,2- or 1,3-propylene glycol, 1,4-butanediol, 1,5-pentanediol or a mixture thereof. Another preferable polyalkylene ether glycol can be prepared from tetrahydrofuran (THF). Further, the polyether diol may be an ether glycol prepared by using ethylene oxide, propylene oxide and/or THF as comonomer. Furthermore, a polyether copolymer prepared from THF and a small amount of 3-methyl THF may be used.

Preferable examples of the polyether diol include poly(tetramethylene ether) glycol (PTMEG), poly(propylene oxide), glycol, propylene oxide-ethylene oxide copolymers and tetrahydrofuranethylene oxide copolymers, among which poly-(tetramethylene ether) glycol is most preferred.

A diol having a hydrocarbon backbone chain, for example, polybutanediol, can be suitably used.

The low-molecular weight polyol and/or polyamine (iii) having a molecular weight of 60 to 500 which is the third constituent of the thermoplastic polyurethane is one or members selected from among straight-chain aliphatic diol and diamines and aromatic diols and diamines. The component (iii) may contain a small amount of a triol. The component (iii) serves as a hard segment of the polyurethane and takes part in the chain extension or crosslinking thereof.

Preferable examples of the low-molecular weight polyol include 1,2-ethanediol, 1,2-propanediol, 1,3-propanediol, 1,4-butanediol, 1,5-pentanediol, 1,6-hexanediol, 1,4-cyclohexanediol, ethylene glycol, propylene glycol, glycerin, hexanetriol, trimethylol propane, hydroquinone diethylol ether and resorcinol ethylol ether. On the other hand, the polyamine includes diphenylmethanediamine, m-phenylenediamine and derivatives thereof. More preferred examples thereof include ethylene glycol, propylene glycol, 1,2-ethanediol, 1,4-butanediol, 1,6-hexanediol, glycerin, hydroguinone diethylol ether, resorcinol ethylol ether and derivatives thereof.

The thermoplastic polyurethane (B) is preferably one prepared by using the low-molecular weight polyol and/or polyamine (iii) in an amount of about 0.2 to 5 equivalents per equivalent of the high-molecular weight polyol (ii). The amount of the component (ii) used affects the hardness of the composition. That is, the use of the component (ii) in a larger amount gives a softer composition.

According to the present invention, the amount of the thermoplastic polyurethane, (B) to be used is 1 to 60 % by weight, while that of the polyacetal resin component (A) comprising the polyacetal ($A_1$) and the modified polyacetal ($A_2$) to be used is 99 to 40 % by weight. Preferably, the amount of the thermoplastic polyurethane (B) is 3 to 50 % by weight, while that of the component (A) is 97 to 50 % by weight. If the amount of the thermoplastic polyurethane (B) is too small the impact strength will not be sufficiently improved, while if it is too large the characteristics inherent in a polyacetal resin will be adversely affected and the delamination of the thermoplastic polyurethane (B) will be difficult to prevent event by the simultaneous use of the modified polyacetal ($A_2$) which is a feature of the present invention.

The inventors of the present invention inferred the reason why the simultaneous use of the modified acetal brings about the specific effects to be as follows: some of the hydroxyl groups of the modified polyacetal ($A_2$) react with the isocyanate groups of the thermoplastic polyurethane (B) or those generated by the thermal decomposition of the polyurethane (B) during melt processing to form a polymer; this polymer acts as a compatibilizing agent for the polyacetal ($A_1$) and the thermoplastic polyurethane (B) to enhance the affinity of the polyacetal resin component (A) with the thermoplastic polyurethane (B); thus, the polyacetal resin component (A) and the thermoplastic polyurethane (B) are homogeneously dispersed in each other to give a phase structure wherein the component (B) is present in the component (A) as fine particles or one wherein the components (A) and (B) are intertwined with each other in a netlike state; this phase structure may presumably contribute to the prevention of the delamination of the thermoplastic polyurethane (B) and the improvement in the impact resistance.

The present invention is characterized by using a specifically modified polyacetal ($A_2$) and an ordinary polyacetal ($A_1$) simultaneously as a polyacetal resin component. Although even a composition prepared by

blending only the above polyacetals ($A_1$) and ($A_2$) with a thermoplastic polyurethane (B) is sufficiently improved in impact resistance and is sufficiently reduced in the delamination of the polyurethane, the additional blending of 0.01 to 10 % by weight (based on the whole composition) of a reactive compound (C) having a reactive group selected from among isocyanate, isothiocyanate, epoxy, amino, mercapto and vinyl groups with the components ($A_1$), ($A_2$) and (B), particularly by the melt-kneading of the components ($A_1$), ($A_2$) and (B) in the presence of such a compound, is more effective in improving the impact resistance, toughness, flex resistance and weld strength and reducing the delamination of the molded article and the mold deposit formed in molding.

Although the reactive compound (C) may be one having one reactive group, for example, an epoxysilane, aminosilane, mercaptosilane or vinylsilane compound, it is preferably one having at least two reactive groups particularly selected from among isocyanate, isothiocyanate and epoxy groups. Particular examples thereof include 4,4'-methylenebis(phenyl isocyanate), 2,4-tolylene diisocyanate, 2,6-tolylene diisocyanate, xylylene diisocyanate, 1,6-hexamethylene diisocyanate, isophorone diisocyanate, and 1,5-naphthalene diisocyanate; diisothiocyanates corresponding to the diisocyanates mentioned above; dimers and trimers of the diisocyanates and diisothiocyanates mentioned above; and derivatives prepared by protecting the isocyanate (-NCO) groups thereof; ethylene glycol diglycidyl ether, polyethylene glycol diglycidyl ether, propylene glycol diglycidyl ether, polypropylene glycol diglycidyl ether, neopentyl glycol diglycidyl ether, 1,6-hexanediol diglycidyl ether, trimethylolpropane triglycidyl ether, bisphenol A diglycidyl ether, hydrogenated bisphenol A diglycidyl ether, a diglycidyl ether of an adduct of bisphenol A with 2 propylene oxide molecules, diglycidyl terephthalate, diglycidyl isophthalate, diglycidyl phthalate, triglycidyl trimellitate, diglycidyl ester of 1,4-cyclohexanedicarboxylic acid and diglycidyl adipate. Although the above mentioned reactive compounds are all effective, those having isocyanate or isothiocyanate groups are more effective from the synthetic standpoint of coloration of the resulting composition in melt kneading, prevention of the delamination of the polyurethane and improvement in the impact resistance. particularly preferable examples thereof include 4,4'-methylenebis(phenyl isocyanate), isophorone diisocyanate, 1,5-naphthalene diisocyanate, 1,6-hexamethylene diisocyanate, 2,4-tolylene diisocyanate, 2,6-tolylene diisocyanate and modification products (derivatives) thereof such as dimers and trimers.

The addition of the reactive compound (C) to the composition of the present invention brings about an increase in the viscosity of the composition (a lowering in the melt index thereof), from which it can be inferred that the compound (C) may react with the polyacetal resin component (A), particularly the modified polyacetal ($A_2$) having hydroxyl groups, and/or the thermoplastic polyurethane (B) to form partially a three-dimensional structure in some cases, thus contributing to the improvement in the affinity of the polyacetal resin component (A) with the thermoplastic polyurethane (B) or in the interfacial adhesion between them.

It is preferable that the composition of the present invention contain various known stabilizers to enhance the stability thereof. Particularly important among such stabilizers are antioxidants, heat stabilizers (decomposition inhibitors) and weathering (light) stabilizers.

The antioxidants to be generally used include sterically hindered phenols and amines; the heat stabilizers to be generally used include hydroxides and inorganic salts of metals, metal salts of fatty acids and nitrogenous compounds such as amidine and amide compounds; and the weathering (light) stabilizers to be generally used include benzotriazoles, benzophenones, aromatic benzoates and hindered amines (piperidine derivatives having a sterically hindering group).

Further, the composition of the present invention may contain various known additives in order to improve the physical properties thereof depending upon the objective use. Examples of the additives include various colorants, lubricants, mold release agents, nucleating agents, surfactants, other polymers, organic high-molecular modifiers and inorganic, organic and metallic and fibrous, powdery and flaky fillers, which may be used alone or as a mixture of two or more of them.

Although the process for the preparation of the composition of the present invention or a molded article thereof is not particularly limited, the composition or the molded article can be basically prepared by melt-kneading the components ($A_1$),($A_2$) and (B) together. Particularly when the component (C) is further added, it is effective that the melt-kneading be conducted in the present of the component (C). The melt-kneading is preferably conducted at a temperature of 270°C or below for at least 30 seconds. The embodiment for the preparation of the composition or the molded article is not particularly limited but the composition or the molded article can be prepared with conventional equipment for the preparation of a synthetic resin composition or a molded article thereof and according to a conventional process therefor. Namely, necessary components are mixed together and kneaded with a single- or twin-screw extruder or other kneader to give a molding pellet, followed by the molding of this pellet. In order to facilitate the dispersion and mixing of the components, it is preferable to employ a process which comprises finely grinding a part or the whole of the resin components, mixing the obtained powder with the residual components, melt-kneading the obtained mixture and molding the obtained pellets, or a process which comprises preliminarily melt-kneading a part of the components constituting the composition [for example, the component (C) and a part of the component ($A_1$) or ($A_2$)] and kneading the obtained master

batch together with the residual components to form an objective composition, which is molded into an objective article. By employing such a process, the effect of the present invention can be enhanced.

Although the composition or the molded article according to the present invention exhibits as such excellent physical properties as described above, the physical properties and stability of the composition or the article are effectively improved by thermal treatment at 80°C or above after the preparation or molding of the composition.

The above-mentioned stabilizers and additives may be added in any arbitrary step. Of course, they can be added and mixed just before the preparation of a final molded article.

As described above, the polyacetal resin composition of the present invention comprising a polyacetal resin and a thermoplastic polyurethane wherein said polyacetal resin comprises a polyacetal and a polyacetal modified by the introduction of hydroxyl groups thereinto is improved not only in impact resistance but also in respect of the delamination of the polyurethane and the weld strength which have been unavoidable problems of the composition comprising a polyacetal resin and a thermoplastic polyurethane according to the prior art. These effects can be enhanced by further adding a specific reactive compound.

The polyacetal composition of the present invention has such excellent characteristics and therefore is of high practical value. Accordingly the composition is especially suitable for the production of automobile parts (such as clips, fasteners, exteriors, trim and wheel covers); electrical and electronic components; and components and parts of business machines, daily necessaries and sundries.

## EXAMPLES

The present invention is further described with reference to the following non-limiting Examples.

### Preparation of modified polyacetal ($A_2$)-1

1500 ppm of glycerin was added to a mixture comprising 96 molar % of trioxane and 4 molar % of 1,3-dioxolane. The obtained mixture was polymerized by the use of boron fluoride ($BF_3$) as a polymerization initiator and the obtained polymer was stabilized by a conventional process. The obtained modified polyacetal resin had a weight-average molecular weight of 35000 and contained hydroxyl groups in an amount of 150 mmol/kg.

### Preparation of modified polyacetal ($A_2$)-2

1000 ppm of trimethylolpropane was added to a mixture comprising 96 molar % of trioxane and 4 molar % of 1,3-dioxolane. The obtained mixture was polymerized by the use of boron fluoride ($BF_3$) as a polymerization initiator. The obtained modified polyacetal resin had a weight-average molecular weight of 45000 and contained hydroxyl groups in an amount of 100 mmol/kg.

### Preparation of modified polyacetal ($A_1$)

A polyacetal copolymer was prepared in the same manner as that employed in the preparation of modified polyacetal ($A_2$)-1 except that no glycerin was added. The obtained polyacetal was a copolymer having a melt index (MI) of 27.0 and containing hydroxyl groups in an amount of 18 mmol/kg.

### Examples 1 to 17 and Comparative Examples 1 to 4

As specified in Tables 1 to 3, the polyacetal ($A_1$), the modified polyacetal ($A_2$)-1 or ($A_2$)-2 and a thermoplastic polyurethane (B) were mixed together and melt-kneaded with a twin-screw extruder at a resin temperature of 210°C to give a pelletized composition (Examples 1 and 2, 5 to 9 and 13 to 16).

The same procedure as that described above was repeated except that a reactive compound (C) [isocyanate or isothiocyanate] was further added. Thus, pelletized compositions were prepared (Examples 3, 4, 10, 11 and 17). In Example 12, a pelletized composition was prepared by mixing a modified polyacetal ($A_2$) with a reactive compound (C), melt-kneading the obtained mixture with a twin-screw extruder at a resin temperature of 190°C to give pellets, mixing the pellets with the residual components and melt-kneading the obtained mixture. For comparison, pelletized compositions not containing any modified polyacetal ($A_2$) were also prepared and evaluated.

The pelletized compositions were each injection molded into test pieces for evaluation. The tests are described below and the results are given in Tables 1 to 3.

A test piece for the evaluation of delamination and of flex resistance is illustrated in the accompanying drawings, in which:

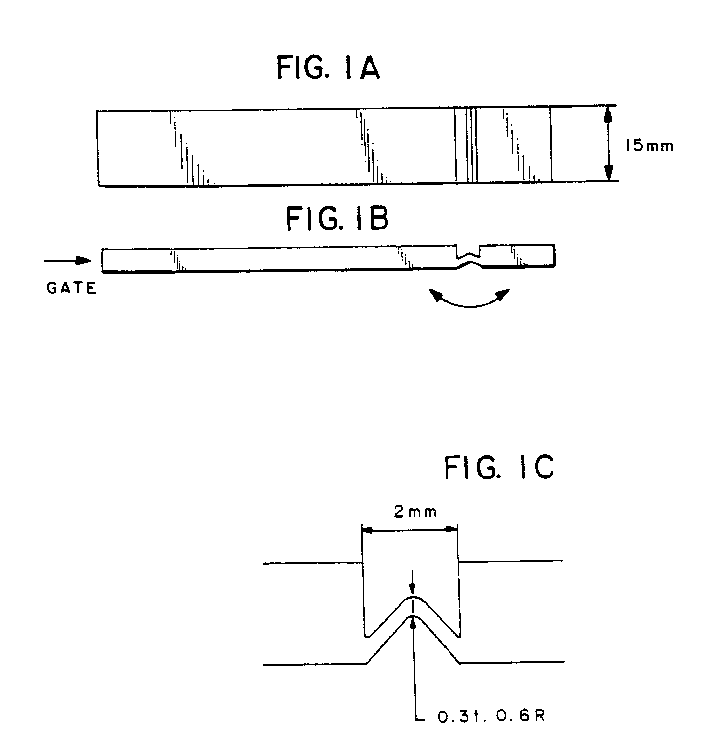

Figure 1 (a) is a schematic plan view of the test piece;

Figure 1 (b) is a schematic front view of the test piece;

and

Figure 1 (c) is an enlarged front view of a bend portion of the test piece.

The test piece was a bar of 15 mm width having a portion of reduced thickness (0.3 mm) measuring 2 mm along the length of the test piece. This portion had a bent configuration (with a radius of curvature of 0.6 mm).

The items and procedures of the evaluations were as follows:

(1) melt index (MI):

the melt index (g/10 min) was determined at 190°C under a load of 2160 g;

(2) tensile strength:

the tensile strength: was determined according to ASTM D638;

(3) Izod impact test:

the notched Izod impact strength (kg.cm/cm) was determined by the use of a test piece having a thickness of 6.4 mm according to ASTM D 256;

(4) weld strength and elongation:

a test piece for weld evaluation having gates at both ends was prepared by molding and examined for the strength (kg/cm$^2$) and elongation (%) at a weld according to ASTM D 256;

(5) delamination:

a test piece having a shape shown in Figure 1 was evaluated for surface appearance, delamination and mottling by observation with the naked eye;

```
    1------------------------------------------> 5
(good)  appearance (delamination, whitening)  (not good)
```

(6) flex resistance:

a hinged molded article shown in Figure 1 was bent at an angle of 180° (in the direction of the curved arrow in Figure 1) at 23°C and 50 % RH to evaluate the endurance;
number of samples : n = 10;
after bending the article at an angle of 180° once, the appearance of the bend was observed with the eye and evaluated according to the following five criteria (the result being given by an average of ten samples):

1 : scarcely any abnormal change observed,
2 : fine crack generated in the bend to cause whitening,
3 : fine crack grew a little but elasticity still remained.
4 : the bend was broken and connected only at the surface layer.
5 : completely broken in two.

Table 1

| | | | Ex. 1 | Ex. 2 | Ex. 3 | Ex. 4 | Comp. Ex. 1 |
|---|---|---|---|---|---|---|---|
| A | $A_1$ | polyacetal (% by weight) | 81 | 81 | 80.1 | 80.1 | 90 |
| | $A_2$ | modified polyacetal ($A_2$)-1 (% by weight) | 9 | — | 8.9 | 8.9 | — |
| | | modified polyacetal ($A_2$)-2 (% by weight) | — | 9 | — | — | — |
| | ($A_1$/$A_2$ weight ratio) | | (90/10) | (90/10) | (90/10) | (90/10) | (100/00) |
| B | thermoplastic polyurethane-1*1 (% by weight) | | 10 | 10 | 10 | 10 | 10 |
| | thermoplastic polyurethane-2*2 (% by weight) | | — | — | — | — | — |
| C | isophorone diisocyanate trimer (% by weight) | | — | — | 1 | — | — |
| | diisothiocyanate (% by weight) | | — | — | — | 1 | — |
| melt index (g/min) | | | 15 | 13 | 3.6 | 4.7 | 23 |
| tensile strength ($kg/cm^2$) | | | 452 | 454 | 460 | 464 | 460 |
| Izod impact strength (notched) (kg·cm/cm) | | | 9.5 | 9.0 | 12 | 11 | 7.5 |
| weld strength ($kg/cm^2$) | | | 304 | 297 | 447 | 428 | 242 |
| weld elongation (%) | | | 10 | 10 | 15 | 14 | 8 |
| delamination — | | | 2 | 2 | 1 | 1 | 4 |
| flex resistance — | | | 3.4 | 3.6 | 2.4 | 2.7 | 4.8 |

*1 polyether-type polyurethane [one prepared by using 4,4'-methylenebis(phenyl isocyanate) as diisocyanate]

*2 polyester-type polyurethane [one prepared by using 4,4'-methylenebis(phenyl isocyanate) as diisocyanate]

Table 2

| | | | Ex. 5 | Ex. 6 | Ex. 7 | Ex. 8 | Ex. 9 | Ex. 10 | Ex. 11 | Ex. 12 | Comp.Ex.2 |
|---|---|---|---|---|---|---|---|---|---|---|---|
| A | $A_1$ | polyacetal (% by weight) | 72 | 60 | 40 | 8 | 72 | 71.1 | 71.1 | 71.1 | 80 |
| | $A_2$ | modified polyacetal ($A_2$)-1 (% by weight) | 8 | 20 | 40 | 72 | — | 7.9 | — | 7.9 | — |
| | | modified polyacetal ($A_2$)-2 (% by weight) | — | — | — | — | 8 | — | 7.9 | — | — |
| | ($A_1$/$A_2$ weight ratio) | | (90/10) | (75/25) | (50/50) | (10/90) | (90/10) | (90/10) | (90/10) | (90/10) | (100/0) |
| B | thermoplastic polyurethane-1*1 (% by weight) | | 20 | 20 | 20 | 20 | 20 | 20 | 20 | 20 | 20 |
| | thermoplastic polyurethane-2*2 (% by weight) | | — | — | — | — | — | — | — | — | — |
| C | isophorone diisocyanate trimer (% by weight) | | — | — | — | — | — | 1 | — | 1 | — |
| | diisothiocyanate(% by weight) | | — | — | — | — | — | — | 1 | — | — |
| melt index (g/min) | | | 12 | 10 | 10 | 9 | 11 | 2.2 | 2.3 | 1.8 | 18 |
| tensile strength ($kg/cm^2$) | | | 378 | 372 | 341 | 328 | 383 | 375 | 381 | 380 | 386 |
| Izod impact strength (notched) (kg/·cm/cm) | | | 13 | 14 | 13 | 13 | 13 | 16 | 15 | 20 | 10 |
| weld strength ($kg/cm^2$) | | | 280 | 282 | 254 | 248 | 277 | 350 | 334 | 353 | 212 |
| weld elongation (%) | | | 9 | 10 | 10 | 10 | 9 | 12 | 12 | 14 | 7 |
| delamination — | | | 3 | 2 | 2 | 2 | 3 | 1 | 1 | 1 | 5 |
| flex resistance — | | | 2.8 | 2.7 | 2.8 | 2.6 | 2.7 | 1.4 | 1.4 | 1.4 | 4.5 |

*1 and *2 : see Table 1

Table 3

| | | | Ex. 13 | Ex. 14 | Comp.Ex.3 | Ex. 15 | Ex. 16 | Ex. 17 | Comp.Ex.4 |
|---|---|---|---|---|---|---|---|---|---|
| A | $A_1$ | polyacetal (% by weight) | 63 | 63 | 70 | 72 | 72 | 71.1 | 80 |
| | $A_2$ | modified polyacetal ($A_2$)-1 (% by weight) | 7 | — | — | 8 | — | 7.9 | — |
| | | modified polyacetal ($A_2$)-2 (% by weight) | — | 7 | — | — | 8 | — | — |
| | ($A_1$/$A_2$ weight ratio) | | (90/10) | (90/10) | (100/0) | (90/10) | (90/10) | (90/10) | (100/0) |
| B | thermoplastic polyurethane-1*1 (% by weight) | | 30 | 30 | 30 | — | — | — | — |
| | thermoplastic polyurethane-2*2 (% by weight) | | — | — | — | 20 | 20 | 20 | 20 |
| C | isophorone diisocyanate trimer (% by weight) | | — | — | — | — | — | 1 | — |
| | diisothiocyanate (% by weight) | | — | — | — | — | — | — | — |
| melt index (g/min) | | | 7 | 7 | 14 | 17 | 15 | 2.0 | 24 |
| tensile strength ($kg/cm^2$) | | | 328 | 327 | 325 | 378 | 381 | 383 | 385 |
| Izod impact strength (notched) (kg·cm/cm) | | | 17 | 16 | 13 | 14 | 14 | 16 | 10 |
| weld strength ($kg/cm^2$) | | | 229 | 218 | 171 | 283 | 279 | 354 | 230 |
| weld elongation (%) | | | 6 | 6 | 4 | 10 | 10 | 12 | 7 |
| delamination — | | | 3 | 3 | 5 | 3 | 3 | 1 | 5 |
| flex resistance — | | | 2.5 | 2.7 | 4.0 | 3.1 | 3.3 | 1.3 | 4.8 |

*1 and *2 : see Table 1

## Claims

1. A polyacetal resin composition comprising 99 to 40 % by weight of a polyacetal resin component (A) and 1 to 60 % by weight of a thermoplastic polyurethane (B), characterized in that said polyacetal resin component (A) comprises 99.5 to 1 parts by weight of a polyacetal ($A_1$) containing hydroxyl groups in its molecule in an amount smaller than 50 mmol/kg and 0.5 to 99 parts by weight of a modified polyacetal ($A_2$) containing hydroxyl groups in its molecule in an amount of 50 mmol/kg or above.

2. A polyacetal resin composition as set forth in claim 1, wherein the said polyacetal ($A_1$) is a (co)polymer prepared by the homopolymerization of formalhyde or a cyclic oligomer thereof represented by the general formula: $(CH_2O)_n$ [wherein n is an integer of 3 or above] or by the copolymerization of formalhyde or a cyclic oligomer thereof with a cyclic ether and/or a cyclic formal.

3. A polyacetal resin composition as set forth in claim 1 or claim 2, wherein the said modified polyacetal ($A_2$) is a (co)polymer prepared by conducting the homopolymerization of formalhyde or a cyclic oligomer thereof represented by the general formula: $(CH_2O)n$ (wherein n is an integer of 3 or above) or the copolymerization of formalhyde or a cyclic oligomer thereof with a cyclic ether and/or a cyclic formal in the presence of a compound having at least three hydroxyl groups.

4. A polyacetal resin composition as set forth in any preceding claim, wherein the modified polyacetal ($A_2$) has hydroxyl groups in an amount of 70 to 300 mmol/kg and a weight-average molecular weight of 500 to 100000.

5. A polyacetal resin composition as set forth in any preceding claim, wherein the weight ratio of the polyacetal ($A_1$) to the modified polyacetal ($A_2$) is between 97 : 3 and 70 : 30.

6. A polyacetal resin composition as set forth in any preceding claim, wherein the said thermoplastic polyurethane (B) is a product constituted of the following components (i), (ii) and (iii):
   (i) a diisocyanate compound,
   (ii) a high-molecular weight polyol having a molecular weight of 500 to 5000, and
   (iii) a low-molecular weight polyol and/or polyamine having a molecular weight of 60 to 500.

7. A polyacetal resin composition as set forth in claim 6, wherein the thermoplastic polyurethane (B) is prepared by using the low-molecular weight polyol and/or polyamine (iii) in an amount of about 0.2 to 5 equivalents per equivalent of the high-molecular weight polyol (ii).

8. A polyacetal resin composition as set forth in any preceding claim, wherein the amount of the polyacetal resin (A) is 97 to 50 % by weight and the amount of the thermoplastic polyurethane (B) is 3 to 50 % by weight.

9. A polyacetal resin composition as set forth in any preceding claim, which further contains a reactive compound (C) having a reactive group selected from among isocyanate, isothiocyanate, epoxy, amino, mercapto and vinyl groups in an amount of 0.01 to 10 % by weight based on the whole composition.

10. A polyacetal resin composition as set forth in claim 9, wherein the said reactive compound (C) is one having at least two isocyanate or isothiocyanate groups.

FIG. 1A

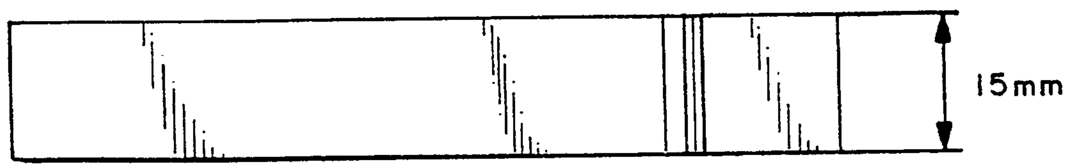


FIG. 1B

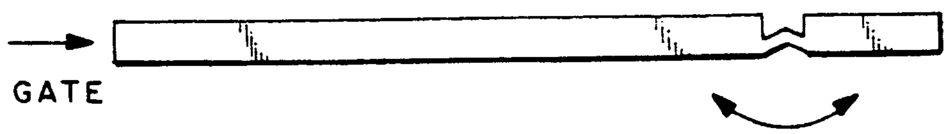


FIG. 1C